# EUROPEAN PATENT SPECIFICATION

(11) **EP 2 129 271 B1**
(45) Date of publication and mention of the grant of the patent: **04.08.2010**
(21) Application number: 07736657.3
(22) Date of filing: 01.03.2007
(51) Int. Cl.: A47J 43/24

(54) **CONVERTIBLE COLANDER**
UMWANDELBARES ABTROPFSIEB
PASSOIRE CONVERTIBLE

(43) Date of publication of application: 09.12.2009
(73) Proprietor: Tosini, Giorgio, 24060 Credaro (BG) (IT)
(72) Inventor: NANI, Roberto, I-24020 Ranica (BG) (IT)
(74) Representative: Garavelli, Paolo
(86) International application number: PCT/IT2007/000150
(87) International publication number: WO 2008/105008

(56) References cited:
- EP-A- 1 754 436
- EP-A- 1 764 017
- WO-A-2006/054168
- US-A1- 2006 060 522

## Description

The present invention relates to a convertible colander, in particular a convertible colander made of an elastic and flexible membrane, equipped with mechanical characteristics that facilitate its use when straining foodstuffs, such as various sizes of pasta, vegetables and rice, avoiding that residues of filamentary foods or foods with reduced sizes get trapped in water draining holes.

The prior art can be ascribed, in particular, to colanders and kitchen tools and, in general, to plastic vessels or products obtained by extrusion or from laminates:
- KITCHEN EQUIPMENT; COFFEE MILLS; SPICE MILLS; APPARATUS FOR MAKING BEVERAGES (A47J) ;
- CONTAINERS FOR STORAGE OR TRANSPORT OF ARTICLES OR MATERIALS, e.g. BAGS, BARRELS, BOTTLES, BOXES, CANS, CARTONS, CRATES, DRUMS, JARS, TANKS, HOPPERS, FORWARDING CONTAINERS; ACCESSORIES, CLOSURES, OR FITTINGS THEREFOR; PACKAGING ELEMENTS; PACKAGES (B65D);
- LAYERED PRODUCTS, i.e. PRODUCTS BUILT-UP OF STRATA OF FLAT OR NON-FLAT, e.g. CELLULAR OR HONEYCOMB, FORM (B32B).

The prior art of a colander taken as reference is represented by the following documents:
- WO-A1-2006/054168: flexible colander, realised through elastomer, elastomer silicone, elastomer silicone obtained through a platinum-catalized cross-linking process, thermoplastic rubber;
- US-A1-20030148010: Composite articles for use in cooking, dealing with a colander made of thermoplastic organic polymer impregnated with a cured, heat resistant polymer, comprising silicone rubber, equipped with a slight degree of flexibility); drenched with platinum-catalyzer.

According to the above-stated prior art, a colander equipped with small-diameter draining holes performs the function of straining thin pasta and rice by draining water contained in cooked vegetables, this latter one being easily able to be scaled and amassed. On the other hand, small holes limit water drainage, by being easily clogged with soft pasta, rice and vegetables in general.

A colander equipped with big-diameter draining holes makes it easy to strain big pasta. On the other hand, big holes let thin pasta, rice and cooked vegetables pass, with the risk that traces of rice and vegetables can easily remain trapped next to holes. WO-A-2006/054168 discloses a flexible colander according to the preamble of Claim 1.

Object of the present invention is solving the physical contradiction emerging from the need of using, under different conditions and times, big holes and small holes, through a new colander of the convertible type, that is capable of: avoiding the contact of foodstuff with hole edges when draining water; making hole cleaning and washing easier. A variation of the convertible colander, described in the second part of this document, favours water draining respectively through big-diameter holes, in a position, and small-diameter holes, in a second position.

The above and other objects and advantages of the invention, as will appear from the following description, are obtained with a convertible colander according to claim 1. Preferred embodiments and non-trivial variations of the present invention are the subject matter of the dependent claims.

The present invention will be better described by the enclosed drawing figures, that show a non-limiting example of an embodiment of the present invention, and in which:

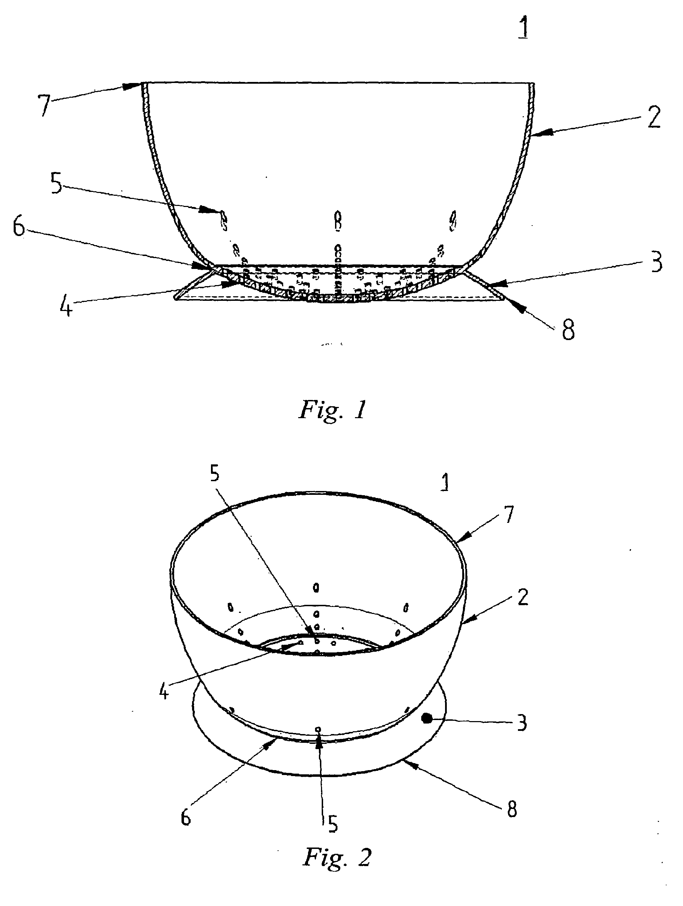

- figures 1 and 2 are front sectional and axonometric views of a generic colander;
- figures 3 and 4 are a view and a detail of the front section of a convex bottom outside a colander, projecting bottom;
- figures 5, 6A and 6B are a view and a detail of the front section of a convex bottom inside a colander, recessed bottom;
- figures 7A and 7B are an axonometric view of the extrados surface of the convex bottom respectively inside, recessed bottom, and outside the colander, projecting bottom;
- figures 8A and 8B are an axonometric view of the intrados surface of the convex bottom respectively inside, recessed bottom, and outside the colander, projecting bottom;
- figures 9 and 11 are front sectional views of a variation of the colander not being part of the present invention, with convex bottom respectively inside, recessed bottom, and outside, projecting bottom;
- figures 10 and 12 are plan views of the variation of the colander with convex bottom respectively inside and outside.

With reference to the figures, a colander 1 is a vessel substantially comprising a bottom 4 connected to a side wall 2 by means of a ring 6. A generic shelf (not shown) supports the lower edge 8 of a pedestal 3, integral with the colander 1 and projecting from the ring 6 or the side wall 2 or the bottom 4; two handles (not shown) project from an upper edge 7 of the side wall 2, or with respect to any height of the side wall 2. A multitude of through-holes 5 are present in the bottom 4 and possibly the side wall 2 or part thereof.

The bottom 4 is delimited: inside the colander 1 by an intrados or internal surface 4in; outside the colander 1 by an extrados or external surface 4out.

The colander 1, containing pasta, rice or vegetables, separates and drain, through the holes 5, the water used for cooking pasta, rice or vegetables.

The bottom 4 comprises a set of grooves 11, arranged concentrically (as shown) or radially (not shown). The grooves 11 cross the intrados or internal surface 4in. The base of each groove 11 is delimited by a throat 12 along which the through-holes 5 are housed, spaced by a certain pitch. The bottom 4, in case of both concentric (as shown) and radial (not shown) grooves 11, is delimited at its periphery by the grooved edge or ring 6. The thin junction that connects the bottom 4 to the grooved edge or ring 6 makes the bottom 4 flexible and easily deformable as regards a convexity reversal of the bottom 4 with respect to the grooved ring 6, as described in the following paragraphs.

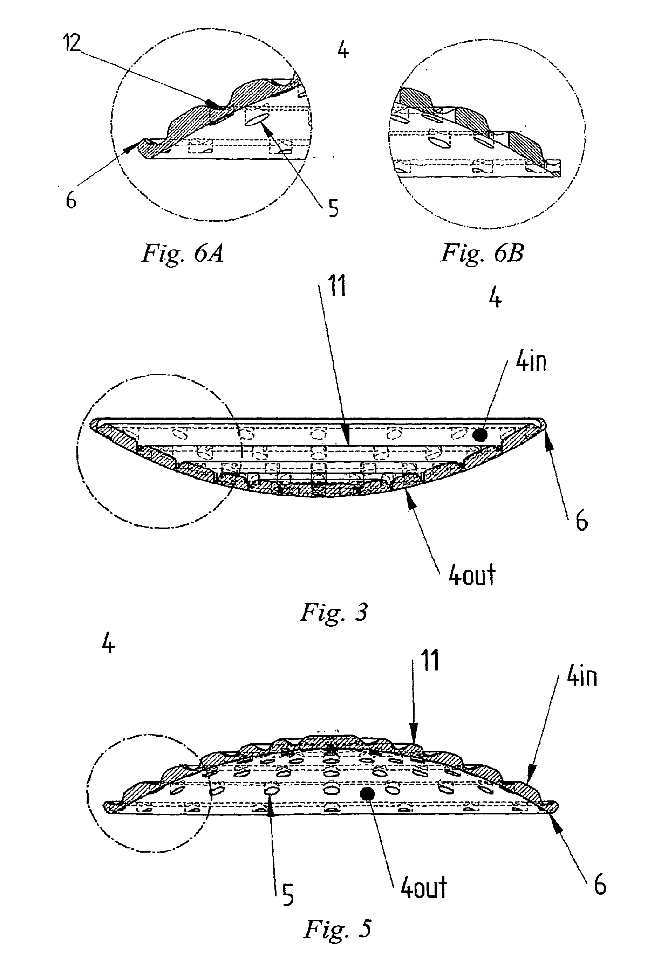

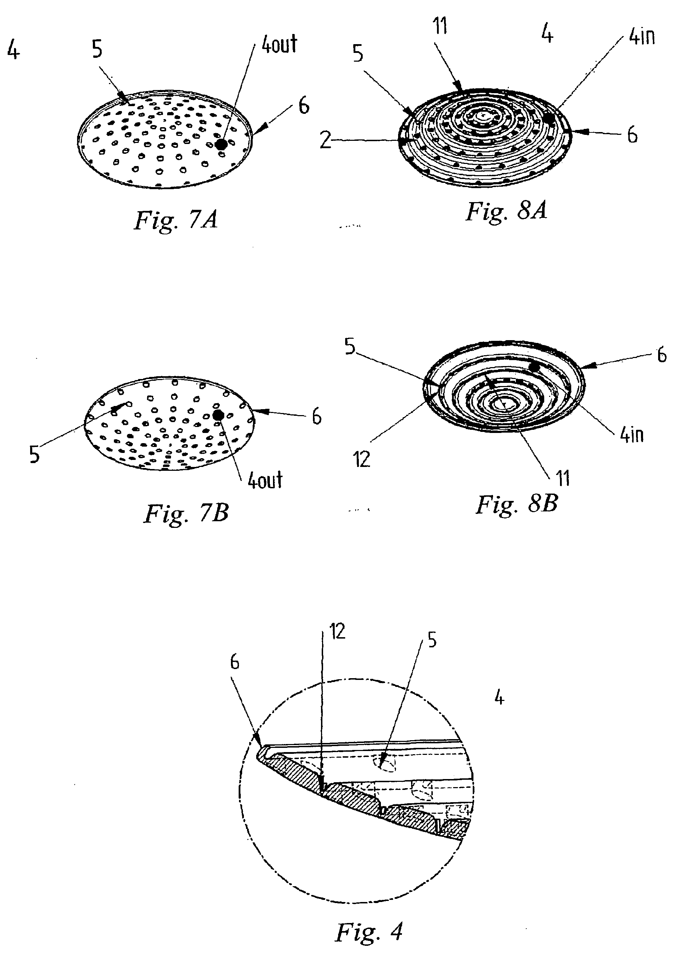

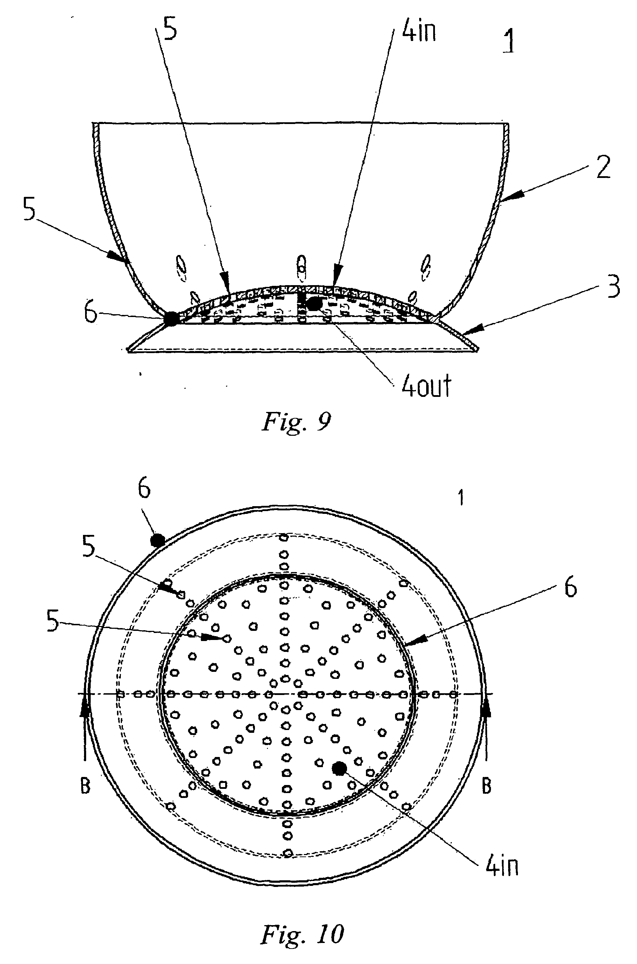

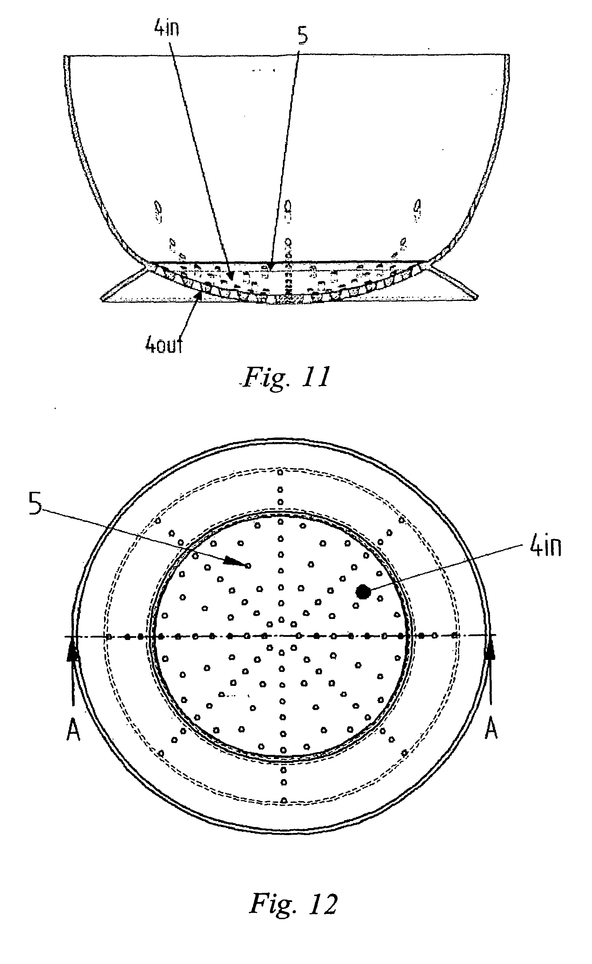

As regards the operation of the colander 1 with convex bottom outside, projecting bottom, there are the following steps:
a) in order to reach such configuration, the operator, by operating from inside the colander 1, pushes its bottom 4 outwards. The bottom 4 changes its own shape, rotating with respect to the grooved ring 6 and appearing according to the drawings in figures 3, 4, 7B, 8B. In particular: the grooves 11 are joined, mutually approaching; the holes 5 keep their circular edge unchanged in the extrados surface 4out; the grooves 11, when approaching, partially cover the holes 5 seen from the intrados surface 4in;
b) the operator throws into the colander 1 pasta, rice or vegetables together with cooking water. Water penetrates inside the intrados surface 4in through the grooves 11, which operate as water straining and conveying channel towards the holes 5 obtained along the throat 12 of each groove 11, collecting on the bottom of grooves 12 and moving along the holes 5. Water reaches the extrados surface 4out when abandoning the colander 1. The approached grooves 11 do not allow the passage of rice grains, pasta, vegetables with a thin or filamentary shape. Pasta, rice or vegetables do not reach the throats 12, remaining supported by the ridges of the intrados surface 4in.
   As regards the operation of the colander 1 with convex bottom inside, recessed bottom, there are the following steps:
c) in order to reach such configuration, the operator, by operating from outside the colander 1, pushes its bottom 4 inwards. The bottom 4 changes its own shape, rotating with respect to the grooved ring 6 and appearing according to the drawings in figures 5, 6A, 6B, 7A e 8A, In particular: the grooves 11 are dilatated, move away; the holes 5 keep their circular edge unchanged in the extrados surface 4out; the grooves 11, by moving away, totally uncover the holes 5 seen from the intrados surface 4in;
d) the operator performs the cleaning operations of the colander 1 whose shape, due to the dilatated grooves 11, enables reaching and removing wastes of pasta, rice or vegetables trapped into the clogged holes 5 and/or along the throats 12.
   According to a variation not being part of the present invention, the convertible colander 1 provides for a bottom 4 whose intrados surface 4in is free from grooves, thereby appearing as the extrados surface 4out, the ring 6 being neither thin nor grooved, but appearing as full and fitting and tangent with respect to the two surfaces 4in e 4out, as shown in figures 9 and 11.
   The through-holes 5 affect the bottom 4 and possibly the side wall 2 or part thereof.
   The section of the ring 6 is structurally rigid and stable due to the inertial contribution of converging sections of the pedestal 3 and the side wall 2. The bottom 4 rotates with respect to the ring 6 respectively reaching two structurally stable positions: bottom 4 with convexity:
   - outwards, projecting bottom, (figures 11 and 12);
   - inwards, recessed bottom, (figures 9 and 10).
   As regards the operation of the variation of colander 1 with convex bottom outside, projecting bottom, there are the following steps:
e) in order to reach this configuration, the operator, by operating from inside the colander 1, pushes its bottom 4 outwards. The bottom 4 reaches its stable position, rotating with respect to the ring 6 and appearing according to the drawings in figures 11 and 12.
   In particular:
   - the intrados or internal surface 4in, by being compressed, makes the holes 5 edges restricted in the intrados surface 4in;
   - the extrados or external surface 4out, by being stretched, makes the holes 5 edges dilatated in the extrados surface 4out;
f) the operator throws into the colander 1 pasta, rice or vegetables together with water used for cooking. Water penetrates inside the intrados surface 4in through the restricted edges of holes 5. In the end, water reaches the extrados surface 4out by abandoning the colander 1. The restricted edges of holes 5 do not allow the passage of rice grains or pasta or vegetables with a thin and filamentous shape.
   As regards the operation of the variation of colander 1 with convex bottom inside, recessed bottom, there are the following steps:
g) in order to reach this configuration, the operator, by operating from outside the colander 1, pushes its bottom 4 inwards. The bottom 4 reaches its stable position, rotating with respect to the ring 6.and appearing according to the drawings in figures 9 and 10.
   In particular: the extrados or external surface 4out, by being compressed, makes the holes 5 edges restricted in the extrados surface 4out;
   - the intrados or internal surface 4in, by being stretched, makes the holes 5 edges dilatated in the intrados surface 4in;
h) the operator throws into the colander 1 pasta, rice or vegetables together with water used when cooking. Water penetrates in the intrados surface 4in through the dilatated holes 5. In the end, water reaches the extrados surface 4out by abandoning the colander 1.

The convertible colander 1, realised in both above-described embodiments, solves the physical contradiction, described at the beginning of this description, dealing with the need of using, in different times, big holes for straining big-sized pasta, and small holes for straining rice, cooked vegetables, thin pasta in general. In fact, the invertion of the colander 1 convexity, or of part thereof, obtained by means of a simple operator's intervention, allows configuring the colander in order to optimise:
- water draining, by keeping at the same time pasta, rice or cooked vegetables;
- cleaning of the colander 1, easily reaching interstices and holes.

In particular, the convertible colander 1 equipped with an internal gooved surface allows draining big amounts of water through big-sized holes, pasta or rice or cooked vegetables remaining supported by the ridge of the internal surface without getting in contact with the draining holes; the passage to the configuration with convexity inside the colander 1 allows cleaning since it reaches interstices simply through the passage of fingers of a hand.

The convertible colander 1 described as variation, equipped with smooth internal and external surfaces, allows adapting the hole sizes according to big-sized pasta, for which the operator decides to convert the colander 1 with inward convexity, or rice, cooked vegetables or thin pasta, in which case the operator arranges the colander 1 with an outward convexity, improving its filtering capacity due to holes having a reduced-diameter inlet edge.

The variation of the convertible colander 1 therefore allow draining water respectively through big-sized holes, in a position, and small-sized holes, in another position.

The convertible colander 1 is preferably made of deformable elastic material, of the type known in the foodstuff field according to directives in force. In particular, reference is made to thermoplastic material, silicone, elastomer; in this case: platinum silicone, particularly adapted for freezing at -50°C and cooking at 300°C; peroxide silicone; elastomer adapted for cooking at 300°C and freezing at -50°C.

Thermoplastic material or elastomers, suitably treated in the vulcanising step (dynamic vulcanising), capable of capturing and keeping air with the result of obtaining a lightweight and insulating structure, allow realising a convertible colander 1 with better insulation and lightness characteristics.

Thermoplastic material or elastomers, worked in a sheet and suitable preformed and assembled with glass cloth, allow realising a convertible colander 1 with high mechanical resistance characteristics against engraving with cutting objects.

The convertible colander 1, according to both the main embodiment and to the variation described above, is preferably produced through a die in its configuration with inward convexity. In such configuration the die reproduces:
- grooves 11 in a dilatated position;
- cylindric holes 5 with maximum diameter.

Constructively, a grooved bottom 4 can have a thickness included between the extrados surface and the groove ridges on the intrados surface equal to 4 mm, and holes whose diameter is equal to 5 mm.

A bi-stable bottom, smooth inside according to the above-described variation, capable of changing the hole size according to the bi-stable position assumed by the bottom itself, can have a uniform thickness of 6 mm and holes with a diameter of 5 mm. The overall sizes of the convertible colander of this application can correspond to those of the prior art. In particular, in order to keep the radial distortion of the attachment edge of the bottom reduced with respect to the lateral colander surface, priority is given to:
- a pedestal shaped as a frustum of cone, tangent to the bottom membrane, in the configuration with convexity inside the colander;
- a lateral surface tangent to the bottom membrane, in the configuration with convexity outside the colander.

## Claims

1. Flexible colander (1) substantially comprising a bottom (4), a side wall (2), a joining element (6) between said bottom (4) and said side wall (2), a plurality of through-holes (5), said colander (1) being delimited by an internal surface (4in) and an external surface (4out), said flexible colander (1) being adapted to change a shape of at least said internal surface (4in), **characterised in that** said internal surface (4in) is equipped with projections (11) that can be retracted or expanded, separated by throats (12), the holes (5) being placed in said throats (12).

2. Colander (1) according to claim 1, **characterised in that** said projections (11) and said throats (12) are adapted to define concentric or radial grooves.

3. Colander (1) according to claim 1, **characterised in that** said projections (11) and said throats (12) are adapted to define a plurality of insulated projections emerging from said internal surface (4in).

4. Colander (1) according to claim 1, **characterised in that** said internal surface (4in) is surrounded by a thin ring (6).

5. Colander (1) according to any one of claims 1 to 4, **characterised in that** the bottom (4) comprises the internal surface (4in).

6. Colander (1) according to claim 1, **characterised in that** the holes (5) passing through said internal surface (4in) have a variable size depending on the shape variation of said internal surface (4in).

7. Colander (1) according to claim 6, **characterised in that** said internal surface (4in) is surrounded by a full and fitted ring (6).

8. Colander (1) according to claim 6 or 7, **characterised in that** a section of the ring (6) is stiffened through an inertial contribution of converging sections such as a pedestal (3) and the side wall (2).

9. Colander (1) according to any one of the previous claims, **characterised in that** it is made of thermoplastic material.

10. Colander (1) according to any one of claims 1 to 8, **characterised in that** it is made of silicone or platinum silicone or peroxide silicone.

11. Colander (1) according to any one of claims 1 to 8, **characterised in that** it is made of elastomer material.

12. Colander (1) according to any one of the previous claims, **characterised in that** it is made of elastic material adapted for cooking at 300°C and freezing at -50°C.

13. Colander (1) according to any one of the previous claims, **characterised in that** thermo-colouring pigments, adapted to point out a temperature of an environment in which they are immersed or to point out a temperature of a material with which they are in contact, are additional ingredients to the basic material.

14. Colander (1) according to any one of the previous claims, **characterised in that** it is adapted to be subjected to a dynamic vulcanising treatment of a type capable of trapping and keeping air obtaining a lightweight and insulating structure.

15. Colander (1) according to any one of the previous claims, **characterised in that** it is composed by joining a membrane composing the elastic material with glass cloth, obtaining a composite structure with high mechanical resistance characteristics against engraving with cutting objects.

## Patentansprüche

1. Flexibles Nudelsieb (1), das grundlegend einen Boden (4), eine Seitenwand (2), ein Verbindungselement (6) enthält, zwischen dem genannten Boden (4) und der genannten Seitenwand (2) befinden sich mehrere durchgehende Löcher (5), das genannte Nudelsieb (1) ist durch eine Innenfläche (4in) und eine Außenfläche (4out) begrenzt, das genannte flexible Nudelsieb (1) dient dazu, zumindest die Form der genannten Innenfläche (4in) zu ändern, und ist **dadurch gekennzeichnet, dass** die genannte Innenfläche (4in) mit einziehbaren oder dehnbaren Überständen (11) ausgestattet ist, die durch Kehlen (12) getrennt sind, die Löcher (5) sind in den genannten Kehlen (12) angebracht.

2. Nudelsieb (1) gemäß Patentanspruch 1, das **dadurch gekennzeichnet ist, dass** die genannten Überstände (11) und die genannten Kehlen (12) dazu dienen, die konzentrischen oder radialen Rillen zu definieren.

3. Nudelsieb (1) gemäß Patentanspruch 1, das **dadurch gekennzeichnet ist, dass** die genannten Überstände (11) und die genannten Kehlen (12) dazu dienen, mehrere isolierte Überstände zu definieren, die aus der genannten Innenfläche herauskommen (4in).

4. Nudelsieb (1) gemäß Patentanspruch 1, das **dadurch gekennzeichnet ist, dass** die genannte Innenfläche (4in) von einem dünnen Ring (6) umgeben ist.

5. Nudelsieb (1) gemäß einem der beliebigen Patentansprüche von 1 bis 4, das **dadurch gekennzeichnet ist, dass** der Boden (4) die Innenfläche (4in) einschließt.

6. Nudelsieb (1) gemäß Patentanspruch 1, das **dadurch gekennzeichnet ist, dass** die Löcher (5), die die genannte Innenfläche (4in) durchdringen, ihre Dimension je nach der Formänderung der genannten Innenfläche (4in) ändern.

7. Nudelsieb (1) gemäß Patentanspruch 6, das **dadurch gekennzeichnet ist, dass** die genannte Innenfläche (4in) von einem vollen Anschlussring (6) umgeben ist.

8. Nudelsieb (1) gemäß einem beliebigen der Patentansprüche 6 oder 7, das **dadurch gekennzeichnet ist, dass** der Abschnitt des Rings (6) durch den Trägheitsbeitrag von konvergierenden Abschnitten wie einem Sockel (3) und die Seitenwand (2) gefestigt ist.

9. Nudelsieb (1) gemäß einem der vorhergehenden Patentansprüche, das **dadurch gekennzeichnet ist, dass** es aus thermoplastischem Material hergestellt ist.

10. Nudelsieb (1) gemäß einem der vorhergehenden Patentansprüche von 1 bis 8, das **dadurch gekennzeichnet ist, dass** es aus Silikon oder Platinsilikon oder Peroxydsilikon hergestellt ist.

11. Nudelsieb (1) gemäß einem der Patentansprüche von 1 bis 8, das **dadurch gekennzeichnet ist, dass** es aus Elastomermaterial hergestellt ist.

12. Nudelsieb (1) gemäß einem der vorhergehenden Patentansprüche, das **dadurch gekennzeichnet ist, dass** es aus elastischem Material hergestellt ist, das zum Backen bis 300°C und zum Tiefkühlen bis -50°C geeignet ist.

13. Nudelsieb (1) gemäß einem der vorhergehenden Patentansprüche, das **dadurch gekennzeichnet ist, dass** thermochromatische Pigmente, die sich dazu eignen, die Temperatur der Umgebung, in die sie eingetaucht werden, oder die Temperatur des Materials anzuzeigen, mit denen sie in Kontakt sind, Zusatzstoffe zum Basismaterial darstellen.

14. Nudelsieb (1) gemäß einem der vorhergehenden Patentansprüche, das **dadurch gekennzeichnet ist, dass** eine Behandlung durch dynamische Vulkanisation vorgesehen ist, die Luft aufnehmen und festhalten kann, sodass eine leichte und isolierende Struktur erhalten wird.

15. Nudelsieb (1) gemäß einem der vorhergehenden Patentansprüche, das **dadurch gekennzeichnet ist, dass** es durch Vereinigung einer Membran hergestellt wird, die das elastische Material mit Glastuch darstellt, sodass eine Verbundstruktur mit hohen mechanischen Beständigkeitseigenschaften gegen den Einschnitt durch scharfe Gegenstände erhalten wird.

## Revendications

1. Passoire flexible (1) comprenant essentiellement un fond (4), une paroi latérale (2), un élément d'union (6) entre ce fond (4) et cette paroi latérale (2), une pluralité de trous passants (5), ladite passoire (1) étant délimitée par une surface intérieure (4in) et une surface extérieure (4out), ladite passoire flexible (1) étant capable de varier la forme au moins de ladite surface intérieure (4in), **caractérisée en ce que** ladite surface intérieure (4in) est munie de protubérances (11) rétractiles ou expansibles, séparées par des creux (12), lesdits trous (5) étant réunis dans lesdits creux (12).

2. Passoire (1) selon la revendication 1, **caractérisée en ce que** lesdites protubérances (11) et lesdits creux (12) sont à même de définir des rainures concentriques ou radiales.

3. Passoire (1) selon la revendication 1, **caractérisée en ce que** lesdites protubérances (11) et lesdits creux (12) sont à même de définir une pluralité de protubérances isolées qui émergent de ladite surface intérieure (4in).

4. Passoire (1) selon la revendication 1, **caractérisée en ce que** ladite surface intérieure (4in) est entourée d'un anneau (6) mince.

5. Passoire (1) selon une quelconque des revendications de 1 à 4, **caractérisée en ce que** le fond (4) comprend la surface intérieure (4in).

6. Passoire (1) selon la revendication 1, **caractérisée en ce que** les trous (5) passants à travers ladite surface intérieure (4in) varient de dimension relativement à la variation de la forme de ladite surface intérieure (4in).

7. Passoire (1) selon la revendication 6, **caractérisée en ce que** ladite surface intérieure (4in) est entourée d'un anneau (6) plein et raccordé.

8. Passoire (1) selon une quelconque des revendications de 6 ou 7, **caractérisée en ce que** la section de l'anneau (6) est raidie par effet de la contribution inertielle de sections convergentes comme un piédestal (3) et la paroi latérale (2).

9. Passoire (1) selon une quelconque des revendications précédentes, **caractérisée en ce qu'**elle est réalisée en matière thermoplastique.

10. Passoire (1) selon une quelconque des revendications de 1 à 8, **caractérisée en ce qu'**elle est réalisée en silicone ou silicone platinique ou silicone peroxyde.

11. Passoire (1) selon une quelconque des revendications de 1 à 8, **caractérisée en ce qu'**elle est réalisée en matière élastomère.

12. Passoire (1) selon une quelconque des revendications précédentes, **caractérisée en ce qu'**elle est réalisée en matière souple propre à la cuisson à 300°C et la congélation à -50°C.

13. Passoire (1) selon une quelconque des revendications précédentes, **caractérisée en ce que** les pigments thermocolorants, adaptés pour indiquer la température du milieu dans lequel ils sont immergés ou pour indiquer la température de la matière avec lequel ils entrent en contact, constituent des ingrédients additionnels à la matière de base.

14. Passoire (1) selon une quelconque des revendications précédentes, **caractérisée en ce qu'**elle peut être soumise à un traitement de vulcanisation dynamique du type capable d'englober et de retenir l'air en obtenant une structure légère et isolante.

15. Passoire (1) selon une quelconque des revendications précédentes, **caractérisée en ce qu'**elle est formée par l'union de la membrane constituant la matière souple avec une toile en fibre de verre, en obtenant ainsi une structure composite aux caractéristiques mécaniques élevées de résistance à l'incision avec des objets coupants.
